# EUROPEAN PATENT APPLICATION

(11) **EP 1 477 878 A1**
(43) Date of publication of application: **17.11.2004**
(21) Application number: 03019926.9
(22) Date of filing: 02.09.2003
(51) Int. Cl.: G06F 1/00

(54) **Method of implementing an interpreter language firewall into a controller**

(30) Priority: 12.05.2003 EP 03010609
(71) Applicant: Infineon Technologies AG, 81669 München (DE)
(72) Inventor: Valverde, Antonio, 81737 München (DE)
(74) Representative: Epping Hermann & Fischer

(57) **Abstract**

The invention relates to a method of implementing an interpreter language firewall into a smart card controller, where program code and program data are located in defined memory areas (2, 3 and 4) and a first program code is needed to be able to access the memory area of a second program code or data and the program code is executed by the use of a interpreter by mapping the interpreter (1.1) in the defined memory areas (2, 3 and 4) of the first program code and the second program code.

## Description

The invention relates to a method of implementing an interpreter language firewall into a controller.

Controllers are often used for security systems, for example access control systems for computer systems. It is especially in these or in similar contexts that applications are to be executed on a controller. Different applications or applets are located in different memory areas, the so-called packages. An implementation of the Runtime Environment of any interpreter language should support isolation of these packages. In this context isolation means that one application is not able to access an application located in another package, unless the other application provides an interface for access.

An interpreter language firewall provides protection against the most frequently anticipated security concerns, for example developers mistakes and design oversights that could allow sensitive data to be "leaked" to another applet or application. An applet may be able to obtain an object reference from a publicly accessible location, but if the object is owned by an applet in another context the firewall ensures security. For that for example the "Java Card 2.1 Java Card Runtime Environment specification" specifies the basic minimum protection requirements of context and firewalls. To enable applets to interact with each other and with the Java Card Runtime Environment, some well-defined yet secure mechanisms are provided so that one context or an application can access an object or an application belonging to another package.

Between the different packages access control rules are defined in each package and controlled by a program counter. In some smart card controllers, the memory areas in which the applications or the packages are located belong to predefined or dynamical memory area. The interpreter, which is used to execute the byte code containing these applications must be located in a privileged layer, for example the so-called operating system layer. This is because the interpreter has to have access to all the applications in order to fetch and execute the codes. So access control between those applications cannot be enforced by the program counter.

In particular Java Card is an application of the Java language to smart cards. It consists of a Java Card Virtual Machine, a Java Card Runtime Environment, and a Java Card application programming interface.

Especially Smart cards, too, include a smart card controller and are often used for security systems, for example access control systems for computer systems. It is especially in these or in similar contexts that Java applications are to be executed on a smart card controller.

The above firewall protection is defined in the "Java Card 2.1 Runtime Environment Specification" from Sun Microsystems. This Java Card firewall provides protection against the most frequently anticipated security concerns, for example developers' mistakes and design oversights that could allow sensitive data to be "leaked" to another applet or application. An applet may be able to obtain an object reference from a publicly accessible location but if the object is owned by an applet in another context the firewall ensures security. For that the "Java Card 2.1 Java Card Runtime Environment specification" specifies the basic minimum protection requirements of context and firewalls. To enable applets to interact with each other and with the Java Card Runtime Environment, some well-defined yet secure mechanisms are provided so that one context or an application can access an object or an application belonging to another package.

Between the different packages, access control rules are defined in each package and controlled by a program counter. In some controllers the memory areas in which the applications or the packages are located belong to predefined or dynamical memory areas. The interpreter, which is used to execute the byte code containing these applications, must be located in a privileged layer, for example the so-called operating system layer. This is because the interpreter has to have access to all the applications in order to fetch and execute the codes. So access control between those applications cannot be enforced by the program counter.

It is an object of the present invention to realize interpackage access control for any controllers in a more secure way.

This object is achieved by a method according to claim 1. Advantageous further developments are as set out in the respective dependent claims.

It is the advantage of the present invention that, by mapping an interpreter into all the located or defined memory areas that the packages are located in, interpackage data access rules are applicable and other applications located in other packages can only be accessed when an interpackage access permission is granted for reading or writing. So it can be said that as long as the language needs an interpreter and a firewall, this invention will be applicable.

It is a further advantage of the present invention that it is suitable for different interpreter languages as MEL, Basic, Java, Java Card, and any interpreter language being similar to these interpreter languages.

It is another further advantage of the present invention, that it is suitable for any controllers and also for Smart Card Controllers.

The invention will be described in detail herein below on the basis of an embodiment shown in the drawings.

Figure 1 is a schematic drawing of a preferred method of the present invention.

Figure 2 shows a table defining access rights for different interpreter language elements.

Figure 3 is a schematic drawing of the allocation of the different interpreter language elements.

According to the object of the present invention, a special type of smart card controller combined with a Java Card interpreter will be described in the following to reach a better understanding of the detailed description of the preferred method. This is, of course, not the only possible application.

In the following, a preferred embodiment related to a security controller "SC" is described. The security concept of the "SC" is based on designated packages. These packages are used as the basic building blocks for programming. A package is an encapsulated library of code together with its permanent data. A package does not have arbitrary access to other packages. Instead, access to a package is restricted by its own package specific access rights. In fact, the term "encapsulated" in the package definition means that each package includes a declaration of rights granting secure access to the package by all other packages. The package that is called first is referred to as the root package.

All packages, including the operating system package, are treated on an equal footing with respect to access protection from other packages. A function call from one package to another package is protected by hardware and may be performed immediately. There is no need for the operating system to control function calls. Each package guards itself by means of attributes specifying how the package may be accessed by other packages at one time. The smart card operating systems for the "SC" has full access to the code and data of all packages, except the security layer.

The "SC" must provide a memory management unit that allows the mapping of physical addresses to virtual addresses. In that case, the program counter will always contain virtual addresses.

The "SC" has an implementation of the following features to support the implementation of a Virtual Machine:
- a group of "SC" instructions, called Virtual language Fetch Instructions, used to extract a byte from a byte code stream and branch to a location where an associated sequence of native instructions is located. Another group of instructions allows to fetch and process the parameters associated to a byte code in the byte code stream;
- a set of registers that contain a pointer, for example a Virtual Instruction Pointer (VIP), to a current position of the byte code stream, a base pointer to the beginning of the Java card interpreter, for example the Virtual Machine Executing Unit (VMXU), a value in the top of a stack, a stack pointer and a register to store fetch parameters;

The byte code is seen as data to be fetched to the "SC" registers and not as code to be directly executed. Therefore, byte codes are subject to the data access rules and not to the code access rules.

The natural package to place a Java Card interpreter is in a privileged layer like the operating system. The undesirable consequence of this is the possibility of any access of any data in any package due to the fact that the operating system layer has full access to the data in any package.

According to the object of the present invention, a Java Card interpreter is mapped by means of the memory management unit into all the allocated packages, so that interpackage data access rules apply and other packages can only be accessed when interpackage access permission is granted for reading or writing. For example, if an application in package 1 is invoked from an application out of package 2, a base pointer has to be initialized to the invoked package so that the access rules of this package are applicable while the byte codes of the invoked application are processing.

All application invocation can be performed through specific instructions, so that a VIP-register (virtual instruction pointer) points to the byte codes of the invoke application when an invoke byte code is executed, and to the byte code of the invoking application that is executed when a return byte code is executed. In that case, the Java Card Runtime Environment has to save and restore the context during the execution of the method invocation and the return the byte codes.

The application invocation sequence could be written as follows:
- save the application context into a stack;
- create a new stack frame into the stack and put arguments as first local variables;
- set the VIP-registers to the address of the invoked method;
- set the base pointer to VMXU-register (virtual machine execution unit) to the starting address of the Java card interpreter mapped to the invoked package;
- fetch a new byte code with a specific instruction.
- execute the byte code

The return sequence would be:
- erase the contents of the stack frame;
- restore the application context;
- restore the stack pointer;
- restore the VIP at the end of the VMXU-register
- fetch a new byte code with a specific instruction.
- execute the byte code

In order to avoid that any application can be invoked from any package, the application invocation sequence should be able to check that the invoked method or application will fulfill one of the following requirements:
- it is a public or protected method inherited by the invoking application;
- it is a shareable interface implemented by the invoking application;
- it is a static method;
- it is a Java Card Runtime Environment entry point method;
- it is a global array method.

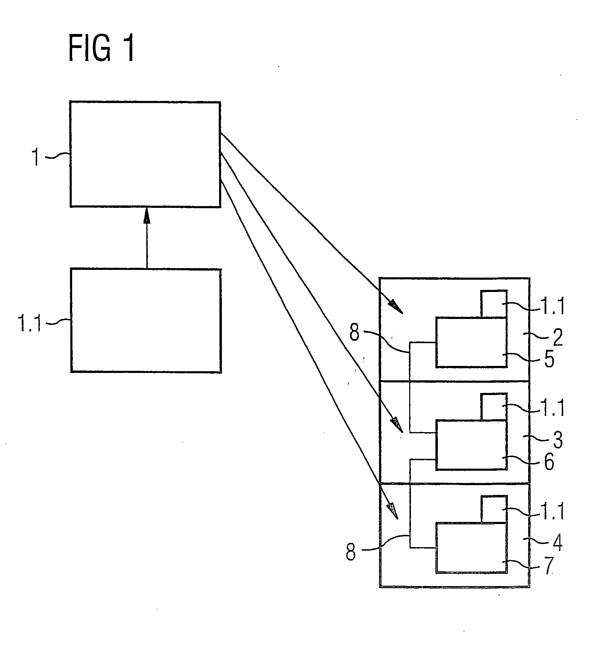

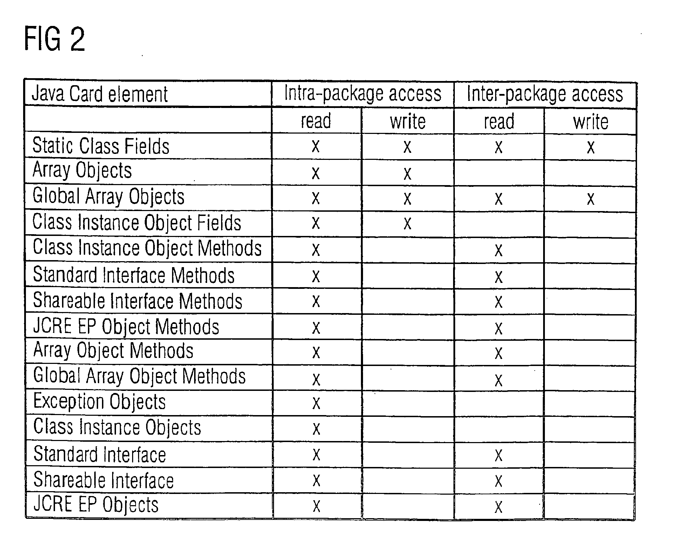

In Figure 2, a table is shown concerning the defined access rights for different Java Card elements. The schematic drawing of Figure 1 shows the pointing of the virtual program counter 1 to the different memory areas 2, 3 and 4 where different applets 5, 6 and 7 with different applications are located. By using the pointing of the virtual program counter 1 to the different memory areas 2, 3 and 4 the Java Card Interpreter 1.1 is mapped to the Java program codes. By using the memory management unit of the smart card controller the address of the Java Card Interpreter 1 is mapped into all the active packages 2, 3 and 4.

Mapping in this context can be a copying of the Java Card Interpreter into the different memory areas 2, 3 and 4 respectively to the different Java program codes, or it can be a pointing to the different memory areas 2, 3 and 4 respectively to the different Java program codes, so that by executing the Java program code the Java Card Interpreter is executed in the same memory area for the controlling of the access rights 8 at any time.

With the Java Card Interpreter 1.1 being mapped into the active packages the access control rules 8 can be controlled although the layer in which the memory areas 2, 3 and 4 are located in provides full access to every package 5, 6 and 7.

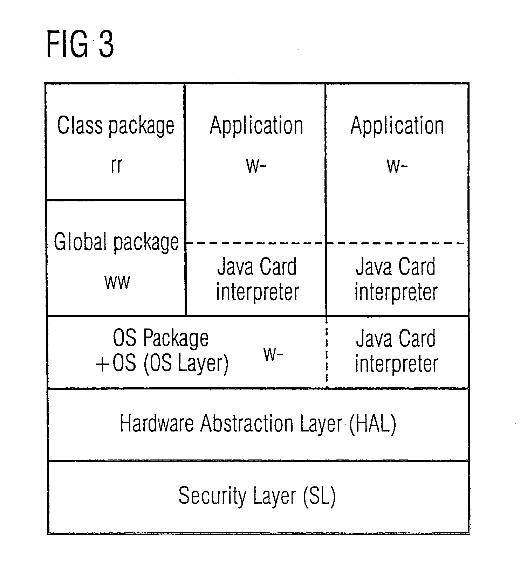

The naming and allocation of the different packages in the different layers is shown in Figure 3. Figure 3 also includes different access rights according to the access rules defined in Figure 2. In the following the access rights definition of Figure 3 will be briefly explained:
- rr: Interpackage access allowed for reading, no intrapackage access allowed;
- ww: Interpackage access allowed for reading and writing, no intrapackage access allowed;
- w-: Intrapackage access allowed for reading and writing, no interpackage access allowed.

Furthermore, the following is a short package description:
- the security layer is the SL package;
- the "HAL" package is the hardware abstraction layer which provides device drivers and also allows new drivers to be written;
- the OS package is where the instance of the Java Card Runtime Environment is located. The OS-package is a privileged package. This package also contains the operating system of the smart card controller; the Java Card Interpreter has to be mapped to this package;
- the class package contains the method area for all classes in the card. Read access is allowed from any other package;
- the global package contains static fields and global arrays. Read and write access is allowed from any other package in the global package;
- the application package contains the instances of applets, therefore each package corresponds to a different Java Card package installed in the card. For the application packages only interpackage access is allowed for reading and writing, the Java Card Interpreter has to be mapped to any of the active application packages.

### List of reference numerals

- 1: Virtual Program Counter (VPC)
- 1.1: Interpreter
- 2, 3, 4: memory area
- 5, 6, 7: applet with program code
- 8: access rights

## Claims

1. Method of implementing an interpreted language firewall into a controller where program code and program data are located in defined memory areas (2, 3 and 4) and a first program code is needed to be able to access the memory area of a second program code or data, and the program code is executed by the use of a interpreter,
**characterized by**
mapping the interpreter (1.1) in the defined memory areas (2, 3 and 4) of the first program code and the second program code.

2. Method according to claim 1,
**characterized in that**,
the interpreter (1.1) controls access rights (8) of the access of the first program code to the memory area of the second program code or data.

3. Method according to claim 1 or claim 2,
**characterized in that**,
the interpreted language is Java.

4. Method according to claim 1 or claim 2,
**characterized in that**,
the interpreted language is Java Card.

5. Method according to claim 1 or claim 2,
**characterized in that**,
the interpreted language is MEL

6. Method according to claim 1 or claim 2,
**characterized in that**,
the interpreted language is Basic

7. Method according to one of the claims 1 to 6,
**characterized in that**,
the controller is a smart card controller

8. Method according to claim 7,
**characterized in that**,
the smart card controller is a so-called security controller.

9. Method according to one of the claims 1 to 8,
**characterized in that**,
the program code or program data is Java program code or ava program data.

10. Method according to one of the claims 1 to 8,
**characterized in that**,
the program code or program data is MEL program code or MEL program data.

11. Method according to one of the claims 1 to 8,
**characterized in that**,
the program code or program date is basic program code or basic program data

12. Method according to one of the claims 1 to 11,
**characterized in that**,
the interpreter is an Java Interpreter.

13. Method according to one of the claims 1 to 11,
**characterized in that**,
the interpreter is an Java Card Interpreter.

14. Method according to one of the claims 1 to 11,
**characterized in that**,
the interpreter is a MEL Interpreter.

15. Method according to one of the claims 1 to 11,
**characterized in that**,
the interpreter is a BASIC Interpreter.

16. Method according to one of the claims 1 to 15,
**characterized in that**,
the interpreter (1.1) is mapped by means of the memory management unit into the defined memory areas (2, 3 and 4).
